# EUROPEAN PATENT APPLICATION

(11) **EP 2 287 639 A2**
(43) Date of publication of application: **23.02.2011**
(21) Application number: 10006091.2
(22) Date of filing: 11.06.2010
(51) Int. Cl.: G02B 3/00

(54) **Lens array imaging optics for a line sensor module**

(30) Priority: 17.08.2009 EP 09010559
(71) Applicant: Sony Corporation, Tokyo 108-0075 (JP)
(72) Inventor: Kamm, Markus, 76199 Karlsruhe (DE); Facius, Zoltan, 71394 Kernen (DE); Weichelt, Christin, 70327 Stuttgart (DE)
(74) Representative: Müller - Hoffmann & Partner

(57) **Abstract**

An embodiment relates to a lens array imaging optics for a line sensor module comprising at least two lens arrays (100, 200) and a black mask (700) arranged between the two lens arrays (100, 200), the black mask (700) being configured to avoid overlap of sub-images of adjacent lens elements (110) of the at least two lens arrays (100, 200) in an image segment (410) of an image plane (400).

## Description

An embodiment of the invention relates to a lens array imaging optics for a line sensor module that may be used in scanners and copiers, where an object to be scanned or copied is recorded line by line in a time sequential manner, so that an image of such an object-line is generated in a plane of the line sensor.

### BACKGROUND

Line sensor modules are commonly used in scanners and copiers. A two-dimensional object to be scanned or copied (e.g. a paper document) is recorded line by line in a time sequential manner in a direction perpendicular to the recorded lines, hereinafter defined as vertical direction. The number of recorded lines defines the resolution of the scanned object in the vertical direction. Each line may be recorded in one shot by a line sensor, which may include a line array of semiconductor (CCD or CMOS) pixels. The number of pixels in the line array defines the resolution of the scanned object in a horizontal direction. Typical values for the resolution are for example 600 dots per inch (dpi) in both horizontal and vertical direction.

An imaging optics, which is coupled to the line sensor, generates an optical image of an entire line of the object to be scanned within the plane of the line sensor. For this purpose, the object to be scanned is located in the object plane of the line imaging optics, and the line sensor is located in the image plane of the line imaging optics.

Line imaging optics consisting of an array of rod lenses are known. Each rod lens may be realized by a short piece of a gradient index optical fiber (e.g. Selfock^{™} lens array). However such gradient index fibre lenses are quite expensive.

These lenses are designed to generate a non-inverted image of the object to be scanned into the plane of the line sensors. The line sensors typically include semiconductor sensor pixels (CCD or CMOS) which are arranged in a linear array. Each fibre lens element captures a section of the object, such as an area of about three times the diameter of each lens.

The partial images generated by each single lens are superposed with considerable overlap in order to finally result in an image of the scanned object.

In order to superimpose these widely overlapping partial images congruently, each partial image is non-inverted and has the same size like the object (magnification factor of 1).

The gradient index fibre lenses have a narrow depth of focus. If the object to be scanned is lifted by only 0.3 or 0.4 mm, for example, the image of the object may not be resolved anymore with the required resolution. This situation may occur when for example the object to be scanned is not completely flat and the scanner is not closed thereby flattening the object or when a page has to be copied from a book with the book pages raising in the inner part of the book due to the bookbinding.

### BRIEF SUMMARY

It is an object of the invention to provide a cost-effective lens array imaging optics for a line sensor module having an extended depth of focus in order to improve fault-tolerance against out-of-focus locations of the object to be scanned. Further, stray-light should be avoided.

This object is solved by a lens array imaging optics for a line sensor according to claim 1 and a lens array imaging optics for a line sensor according to claim 13.

Further details of embodiments of the invention will become apparent from a consideration of the drawings and related description.

### BRIEF DESCRIPTION OF THE SEVERAL VIEWS OF THE DRAWINGS

The accompanying drawings are included to provide a further understanding of the embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
Figure 1 illustrates a lens array imaging optics including a first lens array and a second lens array between an object plane and an image plane as well as a black mask arranged between the first and the second lens array.
Figure 2 refers to a lens array imaging optics similar to Fig. 1 and illustrates shading of a light beam due to the black mask and a limited aperture of the lens elements of the second lens array.
Figure 3 illustrates a lens array imaging optics including a surface shape of the first lens array configured to generate a telecentric light beam at the position of the intermediate image plane.
Figure 4 illustrates a lens array imaging optics having two black masks.
Figure 5 illustrates a lens array imaging optics having three black masks.
Figure 6 illustrates a perspective view of a portion of a lens array imaging optics having two lens arrays and a black mask sandwiched therebetween.
Figure 7 illustrates a lens array imaging optics having one lens array and a means for upscaling and inverting an image detected by a line sensor.
Figure 8 illustrates an arrangement similar to Figure 7.
Figure 9 illustrates a system configured to have a telecentric beam incoming from the object.
Figure 10 illustrates an image in the image plane for a configuration as described in Figure 8.
Figure 11 illustrates an image in the image plane for a configuration as described in Figure 9.

### DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

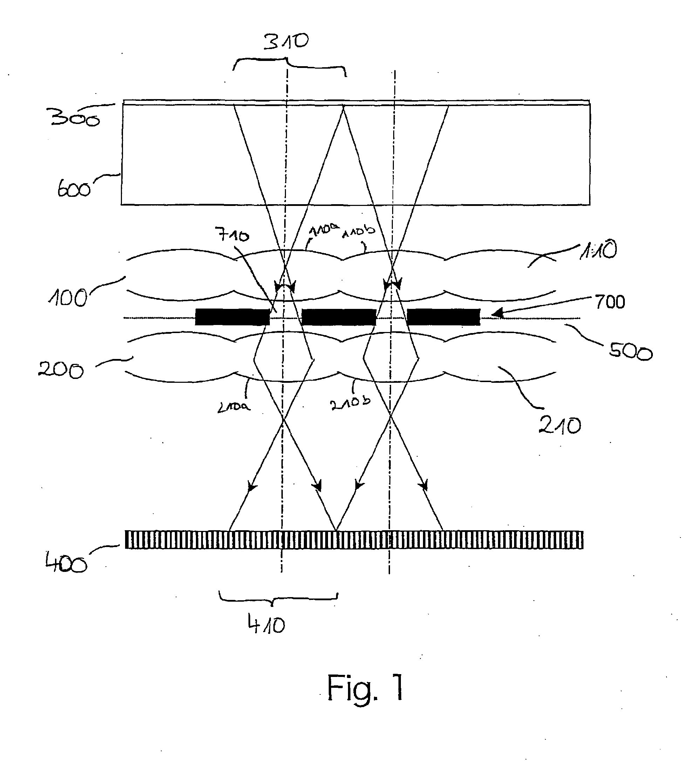

An embodiment of a line imaging optics is illustrated in Fig. 1 and includes at least two lens arrays 100, 200, each of them having an array of lens elements 110, 210. These lens elements 110, 210 may be convex and may be positioned in a linear arrangement.

The lens arrays 100, 200 may be fabricated in an injection moulding process, which is beneficial for lowering manufacturing costs. An optical material for the lens array may be any material with high transmission such as glass or plastic. Suitable plastic materials include Acrylic, Polycarbonate, PMMA (Poly (methyl methacrylate)), Zeon (330R, 430R, E48R and others), Topas (50131s; 5013x16; 6015s-04 and others), Polystyrene, Polystyron, Nylon, Lexan, Pyrex, Lustran, Lustrex, COC (Cyclic Olefin Copolymer), Dylene, Lucite, Ultem, Tyril, Merton, Plexiglass, TPX (Polymethylpentene).

Each lens element 110, associated with a lens element 210, generates an image segment 410 within the plane of the line sensor, which is an image plane 400, each image segment 410 being associated with one object segment 310 of an object positioned within an object plane 300.

The object, which may be a sheet of paper, is to be positioned in the object plane 300 and may be supported by a glass plate 600. The lens elements 110 of the first lens array 100 divide the stripe-wise scanned object into object segments 310, wherein each object segment 310 is associated with one lens element 110 of the first lens array 100 and the associated lens element 210 of the second lens array 200.

The lens elements 110 of the first lens array 100 are allocated to object segments 310, each object segment 310 having a width which corresponds to the width of the associated lens elements 110 and 210. Each lens element 110 of the first lens array 100 is adapted to generate a down-scaled image of the associated object segment 310 at an intermediate image plane 500. These intermediate images of each object segment 310 within the intermediate image plane 500 are inverted.

The lens elements 210 of the second lens array 200 are adapted to generate an inverted image of the intermediate image at the image segment 410 in the plane of the line sensors, which is the image plane 400. By means of this twofold inversion the image segments 410 at the line sensor are finally non-inverted with respect to the object segments 310.

In order to avoid an overlap of image fields of adjacent lens elements 110, i.e. overlap of sub-images generated by adjacent lens elements 110 in the image plane 400, and to avoid a possible non-congruent superposition of such overlapping sub-images when generating the image of an image segment 410, a black-mask 700 is positioned between first lens array 100 and the second lens array 200.

The black mask is configured, e. g. by suitable dimensions of apertures, to block light from entering the second lens array 200 such that image fields of adjacent pairs of associated lens elements 110, 210, e.g. an image of lens pair 110a, 210a and image of lens pair 110b, 210b, do not overlap in the image plane 400. In other words, the image of a single image segment 410 in the image plane 400 is generated by only one pair of associated lens elements 110, 210 such as pair 110a, 210a or pair 110b, 210b. Hence, non-congruent superposition of overlapping images of adjacent pairs of associated lens elements 110, 210 may be avoided.

Therefore, the black-mask 700 comprises apertures 710 which are associated with each object segment 310 and its associated image segment 410, and may be placed at the position of the intermediate image plane 500. The size of the apertures 710 is adapted such that an aperture allows light from the associated object segment 310 to pass, however, the black-mask 700 blocks light from object segments 310 adjacent to the associated object segment 310 of this particular aperture. The black mask may comprise any absorbing material like metals or plastic including black dyes.

The embodiment illustrated in Fig. 1 is adapted to generate image segments 410 of same size like the object segments 310. As a result the image segments 410 at the line sensor fit into a complete image of the object-stripe without any overlap. The number of sensor pixels at the line sensor defines the horizontal image resolution.

The width of each sensor pixel may be in a range of 20 µm to 40 µm and the width of each image segment 410 may be about 1 mm, thus the image resolution of each image segment 410 would include about 25 to 50 pixels in this example.

By providing the black mask 700, the following beneficial technical effect may be achieved. Overlapping sub-images of adjacent pairs of associated lens elements would only superimpose congruently without degradation or blur, if the image magnification of each lens element were exactly 1 and the sub-images were not shifted due to manufacturing tolerances of the lens elements, and since in practice the image magnification may change slightly - e. g. due to distortion or due to the position of each sub-image being slightly shifted relative to each other due to manufacturing tolerances - the overlapping of generated sub-images of different pairs of lens elements in a single image segment in the image plane may not lead to a fully congruent superposition. Therefore, an image segment composed of sub-images of different pairs of associated lens elements 110, 210 would become blurred. The provision of the black mask 700 in a lens imaging optics such as illustrated in Fig. 1 may avoid overlapping of sub-images of different pairs of associated lens elements 110, 210 such that the image of a single image segment is generated by a single pair of associated lens elements 110, 210.

The lens elements 110, 210 may be spherical which may be beneficial with regard to a moulding manufacturing process. The lens elements 110, 210 may also be aspherical which may improve the image quality of the lens array imaging optics. The lens arrays 100, 200 may also be identical.

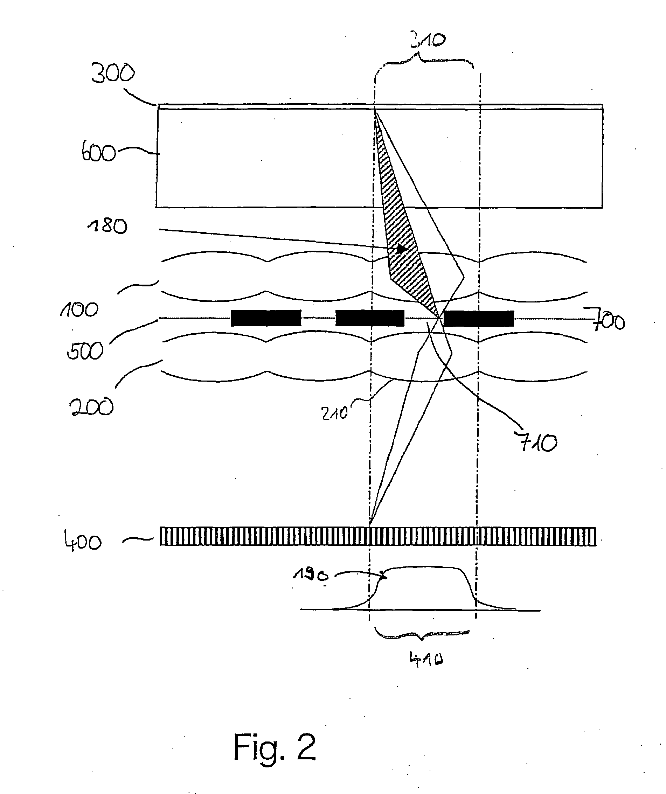

Figure 2 refers to a lens array imaging optics similar to Fig. 1 including a black mask 700 and illustrates how the black mask 700 and a limited aperture of the lens elements 210 of the second array 200 shades light beams such as light beam 180 coming from outer field points of an object plane 310. This shading may cause an inhomogeneous intensity distribution 190 across the associated image segment 410 as is schematically illustrated in the bottom part of Fig. 2.

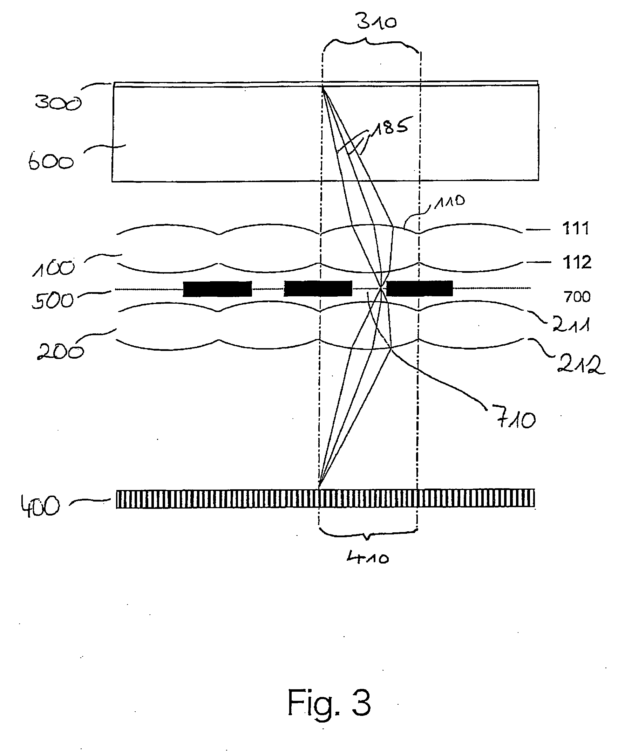

Furthermore, the light beam 180, if not shaded by the black mask 700, will enter the lens element adjacent to lens element 210 and thereby will cause cross-talk. Figure 3 illustrates a lens array imaging optics including a first lens array 100 having surfaces 111, 112 of the lens elements 110 configured to generate a telecentric shape of the passing light beam 185. Thereby, unwanted light shading of outer field points by the black mask 700 as illustrated in Fig. 2 may be avoided. A shape of the first surface 111 of the first lens array 100 is configured as an imaging lens generating images at the intermediate image plane 500 and the shape of the second surface 112 of the first lens array 110 is configured as a field lens redirecting the beam 185 in a telecentric shape.

The diameter D of the lens elements is in a range between 0.5 and 10 mm, in particular 1.0 mm. Metric examples of elements of the embodiments described above include a thickness of the glass plate 600 in a range of 2 mm to 5 mm, in particular 3 mm, a distance between glass plate 600 and the first lens array 100 in a range of 0.5×D to 10×D, in particular 1.5 mm, a distance between first lens array 100 and second lens array 200 in a range of 0.5×D to 5×D, in particular 1 mm, and a distance between second lens array 200 and the image plane 400 in a range of 1×D to 10×D, in particular 3.5 mm. The thickness of first lens array 100 and second lens array 200 may be in a range of 1×D to 5×D, in particular 2.5 mm, and a radius of the lens elements 110 may be in a range of 0.5×D to infinity, in particular 0.9 mm, at the first surface 111 and in a range of 0.5×D to infinity, in particular 0.7 mm, at the second surface 112. Also a radius of the lens elements 210 may be in a range of 0.5×D to infinity, in particular 0.9 mm, at the first surface 211 and in a range of 0.5×D to infinity, in particular 0.7 mm, at the second surface 212.

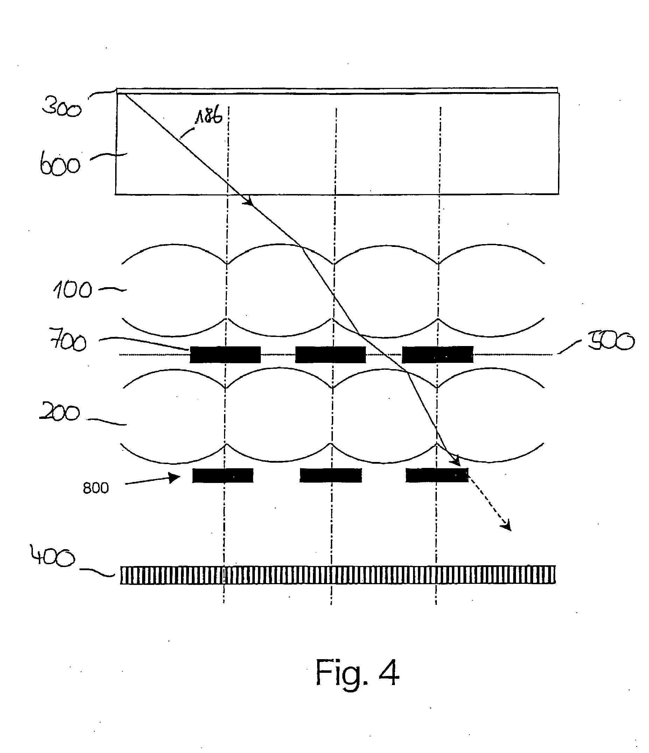

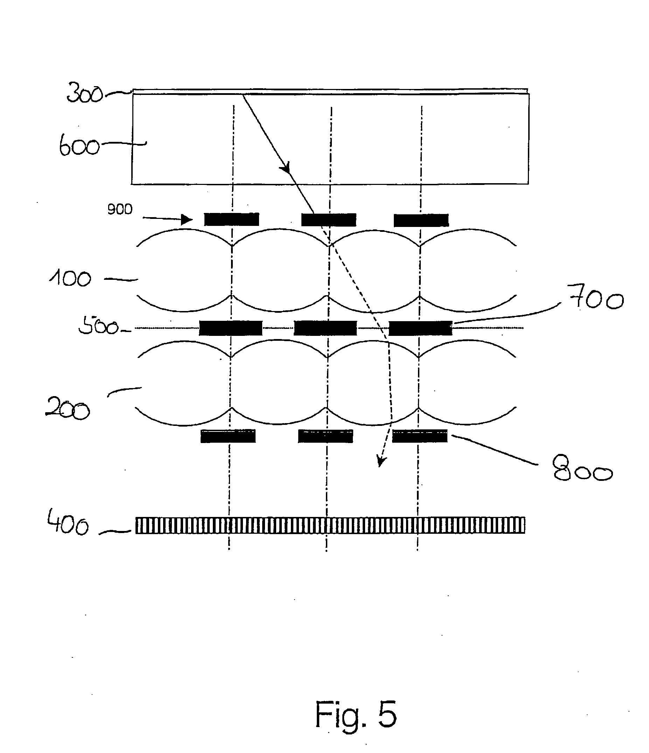

Figures 4 and 5 illustrate lens array imaging optics including additional black masks 800, 900. These additional black masks 800, 900 may be at an entrance position and/or at an exit position of the lens arrays 100, 200 and may block light that is incident under skew angles such as light beam 186 illustrated in Fig. 4.
Therefore, these additional masks 800, 900 support black mask 700 in preventing light of different object segments 310 from being imaged into a single image segment 410 and thus cross-talk and stray light may be further suppressed.

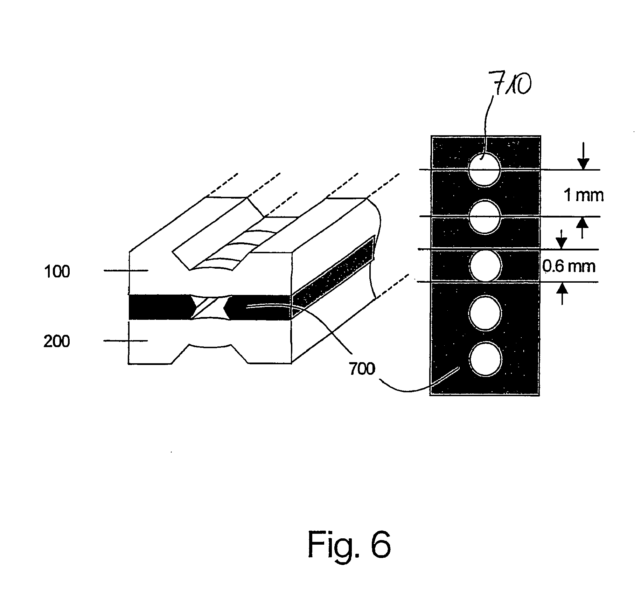

Fig. 6 illustrates a perspective view on a lens array imaging optics including a black mask 700 having apertures 710 sandwiched between a first lens array 100 and a second lens array 200. In this particular example, the apertures 710 of black mask 700 illustrated in the right part of Fig. 6 are arranged along a line having a distance of 1 mm and a diameter of 0.6 mm. However, further geometries of the apertures 710 may be chosen depending on the characteristic of the lens arrays 100, 200.

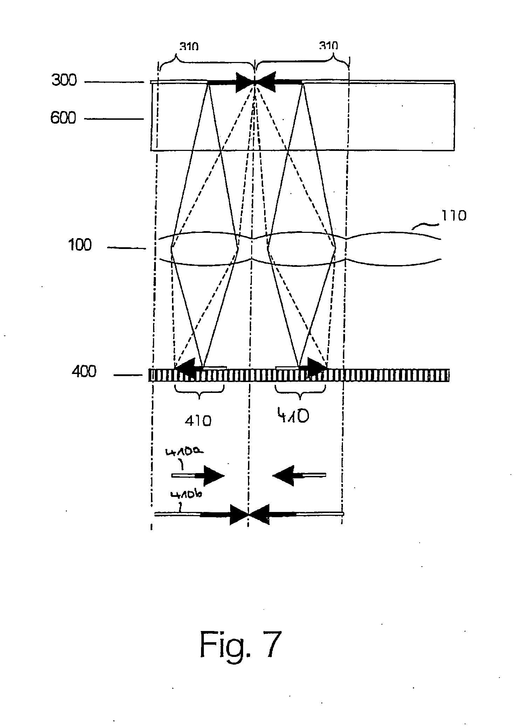

Fig. 7 illustrates another embodiment of a lens array imaging optics having a single lens array 100 positioned between an object plane 300 and an image plane 400.

The lens array 100 comprises lens elements 110, each of them generating an inverse and down-scaled image segment 410 within a plane of the line sensor, which is the image plane 400. Each image segment 410 in the image plane 400 is associated with one object segment 310 of an object positioned within the object plane 300.

The object, which may be a sheet of paper, is to be positioned in the object plane 300 and may be supported by a glass plate 600. The lens elements 110 of the lens array 100 divide the stripe-wise scanned object into object segments 310, wherein each object segment 310 is associated with one lens element 110.

The image information content of each image segment 410 may then be inverted resulting in an inverted image 410a and up-scaled resulting in an up-scaled image 410b. These processes may be carried out by a means for up-scaling and inverting, e.g. a means for Digital Signal Processing (DSP) to restore an image of the original object. By means of digital signal processing (DSP) the partial images 410b are connected seamlessly to the respective adjacent partial images.

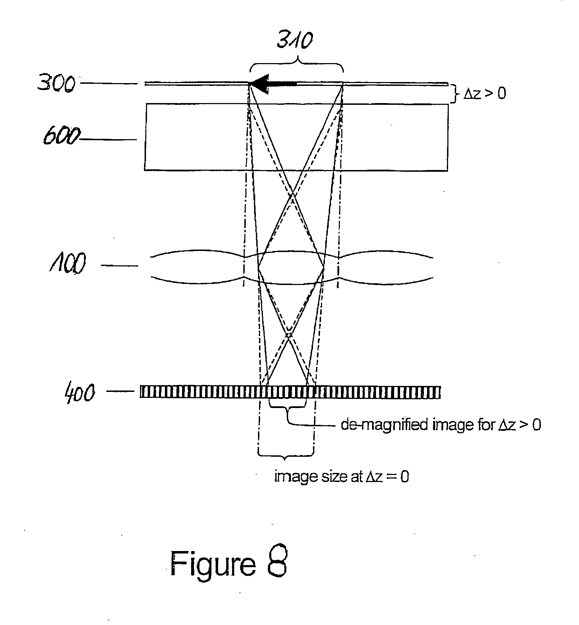

Figure 8 illustrates an arrangement similar to Figure 7. If there is a distance Δz between the glass 600 and the image object 300 (for example when the paper is lifted), then the image object is de-magnified. This will cause artifacts when the images are inverted and up-scaled by digital signal processing (DSP) and stitched together in order to restore the entire image line.

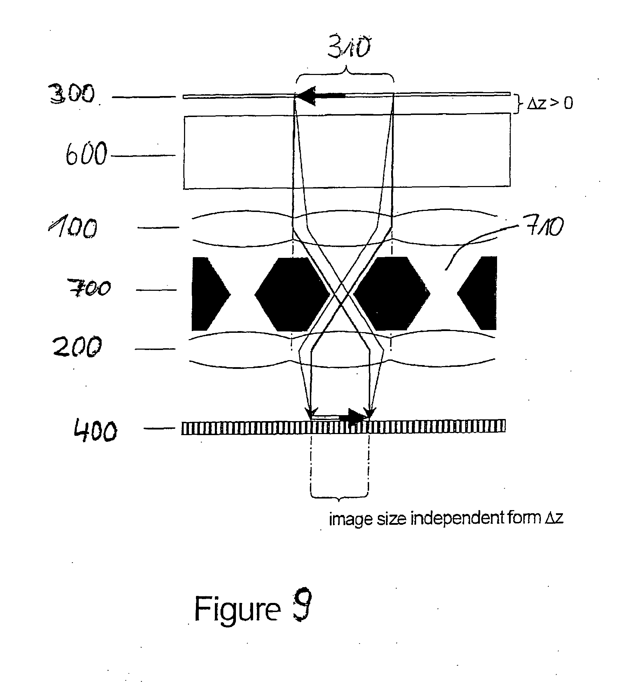

Figure 9 illustrates a system which solves this problem of de-magnification. The system comprises two lens arrays 100 and 200, however arranged in a configuration which still generates an inverted image at the image plane 400. The radius of curvature of the lens elements 110, 210 and the thicknesses and distances are adapted in order to have a telecentric beam incoming from the object.

It is a further advantage to have the lens arrays adapted in order to have a telecentric beam leaving towards the image, because in that case the magnification factor is independent from the sensor distance.

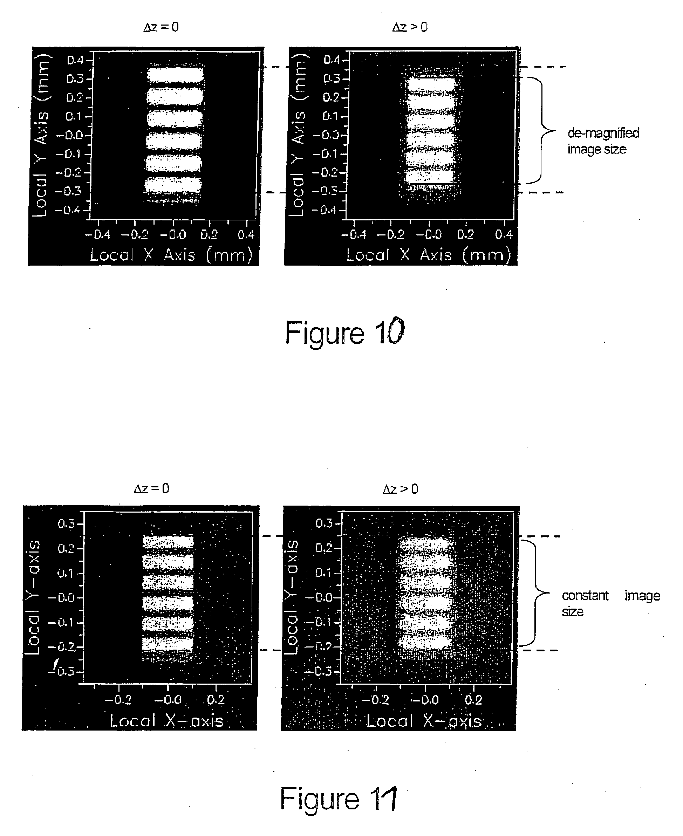

Figure 10 illustrates the simulated image in the image plane 400 of a pattern with sinusoidal brightness modulation in the object plane 300 for a configuration as described in Figure 8 with Δz>0 compared to the situation when Δz= 0. It can clearly be recognized that the image is de-magnified when the object, e.g. a sheet of paper, is lifted.

Figure 11 illustrates the simulated image in the image plane 400 of a pattern with sinusoidal brightness modulation in the object plan 300 for a configuration as described in Figure 9. It can clearly be recognized that the magnification does not depend on whether or not the object is lifted.

Although specific embodiments have been illustrated and described herein, it will be appreciated by those of ordinary skill in the art that a variety of alternative and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

## Claims

1. Lens array imaging optics for a line sensor module comprising at least two lens arrays (100, 200) having lens elements (110, 210),
wherein the lens elements (110, 210) are configured to image object segments (310) in an object plane (300) into associated image segments (410) in an image plane (400), wherein
a black mask (700) is arranged between a first lens array (100) and a second lens array (200) and has apertures (710) with each aperture (710) being associated with an object segment (310) and being configured to hinder light of an object segment (310) adjacent to the associated object segment (310) from passing.

2. Lens array imaging optics for a line sensor module according to claim 1, wherein
a first surface (111) of the first lens array (100) is configured to form a plurality of imaging lenses and
a second surface (112) of the first lens array (100) is configured to form a plurality of field lenses,
wherein the first surface (111) and the second surface (112) are arranged to redirect an incoming light beam in a telecentric shape at an intermediate image plane (500) between the first lens array (100) and the second lens array (200).

3. Lens array imaging optics for a line sensor module according to claim 2, wherein
a thickness of each of the first lens array 100 and the second lens array 200 is in a range from 1×D to 5×D. and
a radius of the lens elements at the first surface (111) of the first lens array (100) and at a first surface (211) of the second lens array (200) is 0.6×D or bigger and
a radius of the lens elements at the second surface (112) of the first lens array (100) and at a second surface (212) of the second lens array (200) is 0.5×D or bigger, with D being the diameter of each lens element.

4. Lens array imaging optics for a line sensor module according to any one of claims 1 to 3, wherein the black mask (700) is arranged in an intermediate image plane (500) between the first lens array (100) and the second lens array (200).

5. Lens array imaging optics for a line sensor module according to any one of claims 1 to 4, comprising at least one further black mask (800, 900) having apertures associated with each object segment (310), the at least one further black mask being positioned between the object plane (300) and the image plane (400).

6. Lens array imaging optics for a line sensor module according to claim 5, wherein one of the at least one further black masks (800, 900) is positioned between the object plane (300) and the first lens array (100).

7. Lens array imaging optics for a line sensor module according to claim 5, wherein one of the at least one further black masks (800, 900) is positioned between the second lens array (200) and the image plane (400).

8. Lens array imaging optics for a line sensor module according to one of claims 1 to 7, wherein the lens arrays comprise any material of acrylic, polycarbonate, PMMA, Zeon, Topas, Polystyrene, Polystyron, Nylon, Lexan, Pyrex, Lustran, Lustrex, COC, Dylene, Lucite, Ultem, Tyril, Merton, Plexiglass or TPX.

9. Lens array imaging optics for a line sensor module according to any one of claims 1 to 8, wherein the black mask (700, 800, 900) comprises any light absorbing material like metal or plastic including black dyes.

10. Lens array imaging optics for a line sensor module according to any one of claims 1 to 9, wherein the first lens array (100) and the second lens array (200) are identical.

11. Lens array imaging optics for a line sensor module according to any one of claims 1 to 10, wherein the lens elements (110, 210) are spherical.

12. Lens array imaging optics for a line sensor module according to any one of claims 1 to 10, wherein the lens elements (110, 210) are aspherical.

13. Lens array imaging optics for a line sensor module according to claim 1,
wherein the image segments (410) are inverted and down-sized with regard to the object segments (410), and
wherein the lens elements are configured to have a telecentric beam incoming from the object.

14. Lens array imaging optics for a line sensor module according to claim 13, wherein the lens elements are configured to have a telecentric beam leaving towards the image.

15. Lens array imaging optics for a line sensor module according to claim 13 or 14, wherein the lens array (100) comprises any material of acrylic, polycarbonate, PMMA, Zeon, Topas, Polystyrene, Polystyron, Nylon, Lexan, Pyrex, Lustran, Lustrex, COC, Dylene, Lucite, Ultem, Tyril, Merton, Plexiglass or TPX.
